# EUROPÄISCHE PATENTSCHRIFT

(11) **EP 0 664 407 B1**
(45) Veröffentlichungstag und Bekanntmachung des Hinweises auf die Patenterteilung: **03.03.1999**
(21) Anmeldenummer: 94118978.9
(22) Anmeldetag: 02.12.1994
(51) Int. Cl.: F16C 11/06

(54) **Kugelgelenk für Kraftfahrzeuge**
Balljoint for motor vehicles
Articulation à rotule pour véhicules à moteur

(30) Priorität: 24.12.1993 DE 4344628
(43) Veröffentlichungstag der Anmeldung: 26.07.1995
(73) Patentinhaber: LEMFÖRDER METALLWAREN AG., 49441 Lemförde (DE)
(72) Erfinder: Moormann, Franz-Josef, D-49401 Damme (DE); Buhl, Reinhard, D-49163 Bohmte (DE)

(56) Entgegenhaltungen:
- DE-B- 1 575 684
- GB-A- 2 265 940
- US-A- 3 125 364

## Beschreibung

Die Erfindung bezieht sich auf ein Kugelgelenk für Kraftfahrzeuge nach dem Oberbegriff des Patentanspruches 1.

Ein solches Kugelgelenk geht beispielsweise aus DE-B-1 575 684 hervor. Darin wird eine am Ende eines Zapfens ausgebildete Gelenkkugel mit einer die Gelenkkugel aufnehmenden Lagerschale in ein topfförmiges Gehäuse eingesetzt und durch einen mit dem offenen Gehäuserand festlegbaren Verschlußring gehalten. Der Verschlußring umschließt den Zapfen mit einem gegenüber dem Kugeldurchmesser kleineren Innendurchmesser und ist einseitig mit dem einen Ende einer Dichtungsmanschette aus einem elastischen Werkstoff verbunden. Das andere Ende der Dichtungsmanschette legt sich dichtend an den Zapfen an.

Kugelgelenke dieser besonderen Bauart werden nach dem Stande der Technik, zum Beispiel entsprechend DE-C-34 09 989, Figur 5, oder US-A-5,066,159, durch Einrollen eines Bördelrandes an der offenen Seite des topfförmigen Gehäuses verschlossen, nachdem vorher die Gelenkkugel mit der Lagerschale durch die offene Gehäuseseite in das Gehäuse eingesetzt wurde. Es ist außerdem bekannt, einen Verschlußring mit einem gegenüber dem Äquator der Gelenkkugel kleineren, gegenüber dem Zapfen an der Gelenkkugel jedoch größeren Innendurchmesser über den Zapfen zu schieben und durch Einrollen eines Bördelrandes an der offenen Gehäuseseite zu befestigen, so daß sich die Lagerschale gegen diesen Verschlußring in einem sich radial innerhalb einer Projektion des Äquators erstreckenden Bereich abstützt. Die Dichtungsmanschette ist mit ihrem einen Ende entweder in einer außen am Gehäuserand oder innen am Gehäuserand ausgebildeten Nut befestigt und eventuell durch einen zusätzlichen Haltering gesichert. Aus der schon genannten US-A-5,066,159 ist es außerdem bekannt, einen solchen Haltering bei der Herstellung der Dichtungsmanschette am gehäuseseitigen Ende der Dichtungsmanschette in deren elastischen Werkstoff einzubetten, wodurch sich zwischen dem Bördelrand des Gehäuses und der Lagerschale eine gewisse axiale Elastizität ergibt, die häufig unerwünscht ist. Bei dieser relativ teuren bekannten Anordnung wird die Dichtungsmanschette in ihrem Schlauchbereich leicht beschädigt, wenn der Zapfen mit der Gelenkkugel bis in extreme Ausschlagpositionen ausgelenkt wird.

Aufgabe der Erfindung ist es, eine kostengünstige Lösung für die Verbindung eines Verschlußringes mit der Dichtungsmanschette in einem Kugelgelenk der eingangs genannten Bauart zu finden, die die Montage des Kugelgelenks erleichtert und auch in extremen Auslenkwinkeln nicht zu einer Beschädigung der Dichtungsmanschette führt.

Zur Lösung dieser Aufgabe sieht die Erfindung eine Ausbildung mit Merkmalen nach dem Kennzeichen des Patentanspruches 1 vor.

Bei dieser Ausbildung bleibt der unmittelbare Kontakt zwischen dem Verschlußring und dem Gehäuse erhalten, so daß sowohl radial als auch axial ein fester Gehäuseverschluß entsteht. Eine axiale Elastizität kann durch eine satte Anlage der Innenfläche des Verschlußringes gegen eine Stützfläche an der Lagerschale erreicht und exakt definiert werden. Das Gehäuse und der Verschlußring bestehen in an sich bekannter Weise aus Metall. Der Verschlußring ist mit dem Ende der Dichtungsmanschette aus Gummi oder dergleichen nur an der ringförmigen Innenmantelfläche und einem daran angrenzenden Bereich der Außenfläche, der sich radial innerhalb der Projektion des Äquators der Gelenkkugel erstreckt, durch Vulkanisation verbunden. Diese Verbindung ist kostengünstig herstellbar und erleichtert die Gelenkmontage sowie den Einbau des Gelenks in ein Kraftfahrzeugfahrwerk.

Auf der Zeichnung ist ein Ausführungsbeispiel der Erfindung dargestellt. Es zeigen:

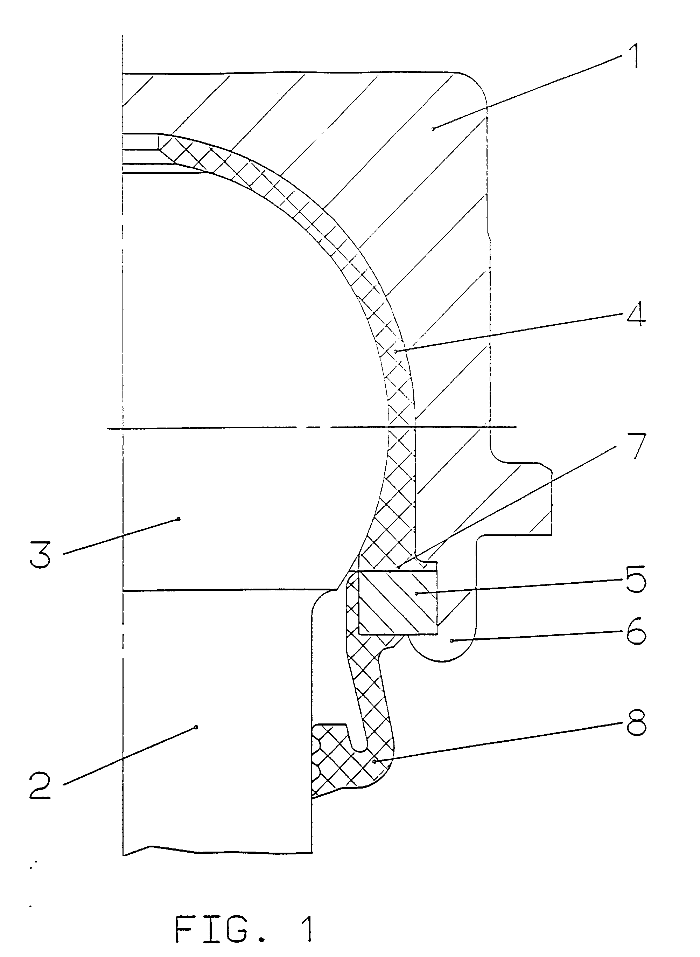

- Figur 1: einen halbseitigen Schnitt durch ein Kugelgelenk in einer durch die Zapfenachse gelegten Ebene und

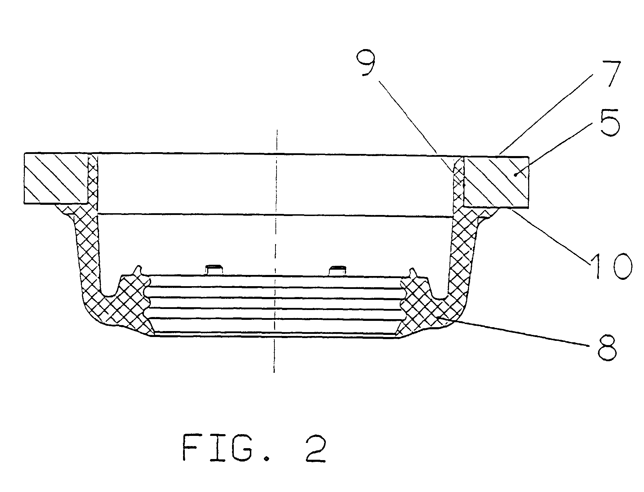

- Figur 2: einen Schnitt entsprechend Figur 1 durch den Verschlußring und die Dichtungsmanschette.

Das Gehäuse 1 des Kugelgelenks ist topfförmig ausgebildet und weist nur eine offene Gehäuseseite auf. Durch diese offene Gehäuseseite wird die an dem einen Ende eines Zapfens 2 ausgebildete Gelenkkugel 3 mit einer Lagerschale 4 eingesetzt. Das Gehäuse 1 und der Zapfen 2 mit der Gelenkkugel 3 bestehen vorzugsweise aus Metall. Die Lagerschale 4 besteht aus Kunststoff, vorzugsweise einem Polyoxymethylen (POM).

Nach dem Einsetzen der Gelenkkugel 3 und der Lagerschale 4 in das Gehäuse 1 wird in dessen offene Seite ein Verschlußring 5 eingesetzt und durch Einrollen eines Bördelrandes 6 verschlossen. Der Innendurchmesser des Verschlußringes 5 ist kleiner als der Durchmesser der Gelenkkugel 3, so daß letztere nicht mehr aus dem Gehäuse 1 herausgezogen werden kann. Bei dem Ausführungsbeispiel ist eine satte Anlage der sich radial erstreckenden Innenfläche 7 gegen eine gleichgerichtete Stützfläche der Lagerschale 4 vorgesehen, um eine begrenzte Axialelastizität zu erreichen. Eine Dichtungsmanschette 8 ist mit der Innenmantelfläche 9 des Verschlußringes 5 und einem angrenzenden Bereich der Außenfläche 10 des Verschlußringes 5 durch Vulkanisation verbunden. Die Verbindung des Verschlußringes 5 mit der Dichtungsmanschette 8 an der Außenfläche 10 des Verschlußringes 5 liegt innerhalb des Bördelrandes 6 nach dem Verschließen des Gelenkgehäuses 1, so daß der unmittelbare Kontakt des Verschlußringes 5 mit dem Bördelrand 6 erhalten bleibt. Im Bereich der Innenmantelfläche 9 des Verschlußringes 5 bildet der Werkstoff der Dichtungsmanschette 8 ein Anschlagpolster für den Zapfen 2 in maximalen Auslenkpositionen des Zapfens 2 gegenüber dem Gehäuse 1, so daß der Schlauchbereich der Dichtungsmanschette 8 auch bei häufigen Auslenkpositionen in Extremlagen nicht beschädigt wird. Das äußere Ende der Dichtungsmanschette 8 kann die in den beiden Zeichnungsfiguren dargestellte Ausbildung aufweisen oder an andere spezifische Gegebenheiten angepaßt werden.

### BEZUGSZEICHENLISTE:

- 1: Gehäuse
- 2: Zapfen
- 3: Gelenkkugel
- 4: Lagerschale
- 5: Verschlußring
- 6: Bördelrand
- 7: Innenfläche
- 8: Dichtungsmanschette
- 9: Innenmantelfläche
- 10: Außenfläche

## Patentansprüche

1. Kugelgelenk für Kraftfahrzeuge, bei dem eine am Ende eines Zapfens (2) ausgebildete Gelenkkugel (3) mit einer diese umgebenden Lagerschale (4) in ein topfförmiges Gehäuse (1) eingesetzt und durch einen mit dem offenen Gehäuserand verbundenen Verschlußring (5) gehalten ist, der den Zapfen (2) mit einem gegenüber dem Kugeldurchmesser kleineren Innendurchmesser umschließt und mit dem einen Ende einer Dichtungsmanschette (8) aus einem elastischen Werkstoffverbunden ist, dessen anderes Ende sich dichtend an den Zapfen anlegt,
**dadurch gekennzeichnet, daß**
der auf der Innenseite (7) unmittelbar an der Lagerschale (4) anliegende Verschlußring (5) und die Dichtungsmanschette (8) an einer Außenfläche (10) und an einer zylindrischen Innenmantelfläche (9) des Verschlußringes (5) festhaftend miteinander verbunden sind, wobei die zylindrische Innenmantelfläche (9) des Verschlußringes (5) ein Anschlagpolster für den Zapfen (2) in dessen maximalen Auslenkpositionen bildet.

2. Kugelgelenk für Kraftfahrzeuge nach Anspruch 1,
dadurch gekennzeichnet, daß
die Dichtungsmanschette (8) und die zylindrische Innenmantelfläche (9) sowie der angrenzende Bereich der dazu rechtwinklig verlaufenden Außenfläche (10) des Verschlußringes (5) durch Vulkanisation miteinander verbunden sind.

## Claims

1. Ball joint for motor vehicles, wherein a joint ball (3) formed on the end of a pin (2) and surrounded by a bearing shell (4) is together with the latter inserted into a pot-shaped housing (1) and held by means of a lock ring (5) connected to the open housing edge, which lock ring encloses the pin (2) with an inside diameter smaller than the ball diameter and is connected to the one end of a gasket (8) made of a resilient material, the other end of which rests sealingly against the pin,
**characterized in that**
the lock ring (5), which at the inside (7) rests directly against the bearing shell (4), and the gasket (8) are adhesively connected to one another at an outer surface (10) and at a cylindrical inner lateral surface (9) of the lock ring (5), the cylindrical inner lateral surface (9) of the lock ring (5) forming a stop pad for the pin (2) in the latter's position of maximum deflection.

2. Ball joint for motor vehicles according to claim 1,
characterized in that
the gasket (8) and the cylindrical inner lateral surface (9) as well as the adjoining region of the outer surface (10) of the lock ring (10) extending at right angles thereto are joined to one another by vulcanization.

## Revendications

1. Articulation à rotule pour véhicules à moteur, dans laquelle une rotule d'articulation (3) formée à l'extrémité d'une tige (2) est introduite, avec une coquille formant palier qui entoure la rotule, dans un boîtier en forme de cuvette, et est maintenue par une bague de fermeture (5) reliée au bord ouvert du boîtier, cette bague entourant la tige (2) avec un diamètre intérieur inférieur au diamètre de la rotule et étant reliée à la première extrémité d'une manchette d'étanchéité (8) en un matériau élastique dont l'autre extrémité s'applique de façon étanche sur la tige,
**caractérisée en ce que**
la bague de fermeture (5), s'appuyant directement, du côté intérieur (7), sur la coquille (4) formant palier, et la manchette d'étanchéité (8) étant reliées l'une à l'autre de façon adhérente à l'emplacement d'une surface extérieure (10) et d'une surface périphérique intérieure cylindrique (9) de la bague de fermeture, la surface périphérique intérieure cylindrique (9) de la bague de fermeture (5) formant un coussin de butée pour la tige (2) dans ses positions de déviation maximale.

2. Articulation à rotule pour véhicules à moteur suivant la revendication 1, caractérisée en ce que la manchette d'étanchéité (8) et la surface périphérique intérieure cylindrique (9), ainsi que la région adjacente de la surface extérieure (10), qui s'étend perpendiculairement à la précédente, de la bague de fermeture (5) sont reliées ensemble par vulcanisation.
